# EUROPEAN PATENT APPLICATION

(11) **EP 1 454 784 A2**
(43) Date of publication of application: **08.09.2004**
(21) Application number: 04250930.7
(22) Date of filing: 20.02.2004
(51) Int. Cl.: B60K 17/346, F16H 57/08

(54) **Differential pinion having a grooved bore**

(30) Priority: 07.03.2003 US 383715
(71) Applicant: BorgWarner Inc., Auburn Hills, MI 48326 (US)
(72) Inventor: Suydam, Christopher J., Michigan 48430 (US); LeCompte, Gregory S., Monroe, Michigan 48162 (US)
(74) Representative: Lerwill, John

(57) **Abstract**

A pinion (146) for a center differential or speed reduction assembly of a motor vehicle transfer case (16) includes external gear teeth (190) and an axial passageway defined by alternating grooves (196) and lands (194). The grooves (196) and lands (194) may be either axial or helical. The grooves (196) provide improved lubrication and debris removal among other features. The pinion (146) is preferably a powdered metal part.

## Description

### BACKGROUND OF THE INVENTION

The invention relates generally to gears for differential assemblies and more particularly to pinion gears for center differentials of motor vehicles having a grooved bore.

The mechanical components in a motor vehicle drive line are numerous and varied. At the head of the driveline is an internal combustion engine which provides power to a manual or automatic transmission. In two-wheel drive vehicles, the output of the transmission is directed through a differential to the drive wheels. In four-wheel drive vehicles, a transfer case is disposed at the output of the transmission and directs power to the four wheels of the vehicle in accordance with the selection of the driver and/or automatically operating systems.

The lubrication modes of each of these components may be generally characterized as varied and distinct. For example, in the internal combustion engine, an oil delivery system provides oil under pressure to bearings associated with the crank shaft and other components. In the transmission and transfer case, lubrication of the gears and bearings is also achieved by a pressurized delivery system. In vehicle axle differentials, the gears are lubricated by partial immersion and splashing of the lubricant.

Turning again to the transfer case, often times the pressurized lubricant is provided to an axial bore within the main output shaft of the transfer case which, in turn, provides lubricant to various bearings through small radial passageways. While this arrangement has been found satisfactory for the bearings and components associated with the main output shaft, remotely or uniquely disposed components of the transfer case may not necessarily benefit from this lubrication system. Specifically, many transfer cases employ a planetary gear assembly having a plurality of pinions disposed upon respective stub shafts which rotate in a carrier between a centrally disposed sun gear and a ring gear. Such planetary gear assemblies may be utilized to provide, for example, a reduced (low gear) speed range for the vehicle or to provide differentiation between the primary and secondary outputs of the transfer case. Since the pinions rotate upon the stub shafts and both revolve about the axis of a sun gear, providing lubrication directly to the bearing surfaces of the pinions is generally not feasible.

Pinion configurations which provide improved lubrication to the pinion bearing surfaces and thus improve service life are therefore desirable.

### BRIEF SUMMARY OF THE INVENTION

A pinion for a center differential of a motor vehicle includes external gear teeth and an axial bearing passageway defined by alternating grooves and lands. The grooves and lands may be either axial or helical. The grooves provide improved lubrication and debris removal among other features. The pinion is preferably a powdered metal part. The pinion may either be a straight (spur) pinion gear for use in a planetary type differential or speed reduction unit or a bevel gear for use in a bevel gear differential.

Thus, it is an object of the present invention to provide an improved pinion gear for use in planetary and bevel gear assemblies of motor vehicle transfer cases.

It is a further object of the present invention to provide a pinion gear for use in planetary gear differential or speed reduction assemblies and bevel gear differential assemblies having an interior passageway or bore defined by alternating grooves and lands.

It is a still further object of the present invention to provide a pinion gear for a planetary gear differential or speed reduction assembly and a bevel gear differential having a center passageway or bore defined by axially oriented alternating grooves and lands.

It is a still further object of the present invention to provide a pinion gear for a planetary gear differential or speed reduction assembly and a bevel gear differential having a center passageway or bore defining helical alternating grooves and lands.

It is a still further object of the present invention to provide a pinion for a planetary gear differential or speed reduction assembly and a bevel gear differential made of powdered metal and defining a center bore having alternating grooves and lands.

Further objects and advantages of the present invention will become apparent by reference to the following description of the preferred embodiment and appended drawings wherein like reference numbers amongst the several views refer to the same component, element or feature.

### BRIEF DESCRIPTION OF THE DRAWINGS

Figure 1 is a diagrammatic view of a drive assembly of a four wheel drive motor vehicle having a transfer case incorporating the present invention;

Figure 2 is a full, sectional view of a transfer case having a planetary gear interaxle differential incorporating the present invention;

Figure 3 is a front, elevational view of a spur gear for a planetary gear differential according to the present invention;

Figure 4 is a full sectional view of a differential pinion gear according to the present invention having axial lands and grooves taken along line 4-4 of Figure 3;

Figure 5 is a full, sectional view of a differential pinion gear according to the present invention having helical lands and grooves taken along line 4-4 of Figure 3;

Figure 6 is a full, sectional view of a transfer case having an alternate embodiment bevel gear interaxle differential according to the present invention;

Figure 7 is a front, elevational view of an alternate embodiment bevel gear for an interaxle differential incorporating the present invention;

Figure 8 is a full, sectional view of an alternate embodiment bevel gear having axial lands and grooves according to the present invention taken along line 8-8 of Figure 7; and

Figure 9 is a full, sectional view of an alternate embodiment bevel gear having helical lands and grooves according to the present invention taken along line 8-8 of Figure 7.

### DESCRIPTION OF THE PREFERRED AND ALTERNATE EMBODIMENTS

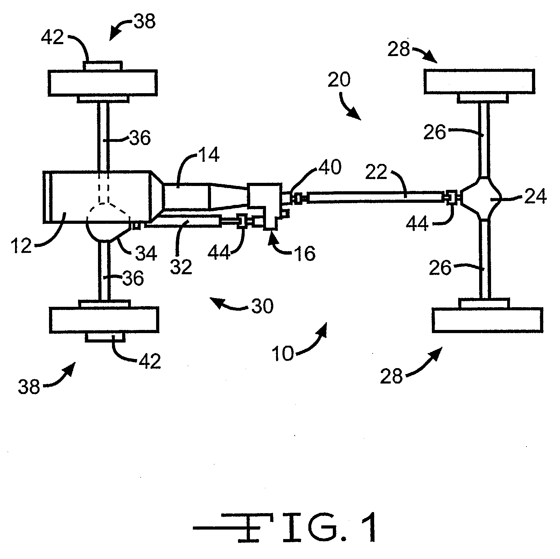

Referring now to Figure 1, a four-wheel vehicle drive train utilizing the present invention is diagrammatically illustrated and designated by the reference number 10. The four-wheel vehicle drive train 10 includes a prime mover 12 which is coupled to and directly drives a transmission 14. The output of the transmission 14 directly drives a transfer case assembly 16 which provides motive power to a primary or rear drive driveline 20 comprising a primary or rear prop shaft 22, a primary or rear differential 24, a pair of live primary or rear axles 26 and a respective pair of primary or rear tire and wheel assemblies 28.

The transfer case assembly 16 also selectively provides motive power to a secondary or front driveline 30 comprising a secondary or front prop shaft 32, a secondary or front differential 34, a pair of live secondary or front axles 36 and a respective pair of secondary or front tire and wheel assemblies 38. Each of the front tire and wheel assemblies 38 may be directly coupled to a respective one of the front axles 36 or, if desired, a pair of manually or remotely activatable locking hubs 42 may be operably disposed between each of the front axles 36 and a respective one of the tire and wheel assemblies 38 to selectively couple same. Finally, both the primary driveline 20 and the secondary driveline 30 may include suitable and appropriately disposed universal joints 44 which function in conventional fashion to allow static and dynamic offsets and misalignments between the various shafts and components.

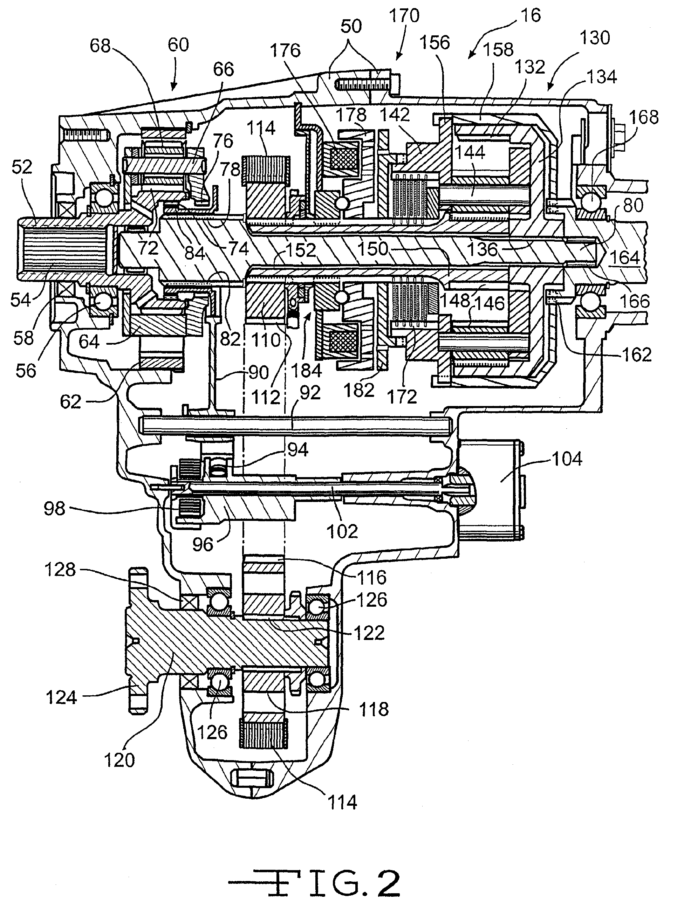

Referring now to Figure 2, the transfer case assembly 16 includes a cast and machined multiple piece metal housing 50 having various surfaces, flats, openings, flanges, bores and counter bores for receiving, supporting and mounting various internal components of the transfer case assembly 16 as will be readily appreciated. The transfer case assembly 16 includes an input shaft 52 having a plurality of female splines or gear teeth 54 disposed upon an inner surface and engageable by complementarily configured male splines or gear teeth disposed upon an output shaft (not illustrated) of the transmission 14 (illustrated in Figure 1). The input shaft 52 is rotatably supported by an anti-friction bearing such as a ball bearing assembly 56. An oil seal 58 provides a suitable fluid tight seal between the input shaft 52 and the housing 50.

The transfer case assembly 16 also includes a planetary gear speed reduction assembly 60 having a stationary ring gear 62 which is retained within the transfer case housing 50 by a suitable retaining device. A planetary gear carrier 64 is generally aligned with the ring gear 62 and includes and supports a plurality of fixed stub shafts 66 which freely rotatably support and retain a like plurality of pinion gears 68. Each of the pinion gears 68 engage both the ring gear 62 and a sun gear 72 which may be integrally formed with the input shaft 52 or may be a separate component coupled thereto by, for example, splines. On the inner surface of the sun gear 72 is a set of female or internal splines or gear teeth 74. Axially aligned with and offset from the splines or gear teeth 74 within the sun gear 72 are a similarly configured set of female splines or gear teeth 76 formed on the planetary gear carrier 64. An axially translatable clutch collar 78 resides upon an intermediate shaft 80 and rotates therewith by virtue of a splined interconnection 82.

The clutch collar 78 includes external or male splines or gear teeth 84 which may be selectively engaged with the female splines or gear teeth 74 of the sun gear 72 or the female splines or gear teeth 76 on the planetary gear carrier 64. Engaged with the female gear teeth 74 of the sun gear 72 the intermediate shaft 80 rotates at the same speed as the input shaft 52 and provides high gear or direct drive mode. When the clutch collar 78 is moved to its extreme right position, the gear teeth 84 of the clutch collar 78 engage the gear teeth 76 on the planetary gear carrier 74 and the speed reduction achieved therethrough drives the intermediate shaft 80 in a low gear or reduced speed mode. The clutch collar 78 is engaged by a shift fork 90 which is slidably disposed upon a cylindrical rod 92. A cam follower 94 extending from the shift fork 90 is received within a helical cam 96. The helical cam 96 is driven through an energy storing spring 98 by a rotating shift rail 102 which in turn is bi-directionally driven by an electric motor drive assembly 104.

Coaxially disposed about the primary output shaft 80 is a chain drive sprocket 110. The chain drive sprocket 110 includes chain drive teeth 112 which engage and drive a drive chain 114. The drive chain 114 extends about and is in continuous engagement with a plurality of chain teeth 116 on a driven chain sprocket 118. The driven chain sprocket 118 is coupled to a secondary output shaft 120 by splines 122 or other suitable positive connection. The secondary output shaft 120 includes a flange 124 or other connecting device which may be a portion of one of the universal joints 44 illustrated in Figure 1. The secondary output shaft 120 is preferably supported in a pair of anti-friction bearings such as the ball bearing assemblies 126. An oil seal 128 provides a fluid tight seal between the secondary output shaft 120 and the housing 50 of the transfer case assembly 16.

The transfer case assembly 16 also includes an interaxle differential assembly 130. The interaxle differential assembly 130 includes an input ring gear 132 which is a portion of a bell shaped input member 134 which is splined to the intermediate shaft 80 by interengaging splines or gear teeth 136. The interaxle differential assembly 130 also includes a carrier 142 which supports a plurality of stub shafts 144 which, in turn, freely rotatably support a plurality of pinion or planet gears 146. The planet gears 146 are arranged in interengaging pairs, one gear of two distinct interengaging pairs of such planet gears 146 being illustrated in Figure 2. An outer planet gear 146 of each interengaging pair of planet gears 146 engages the ring gear 132, as illustrated in the lower portion of Figure 2, and the inner planet gear 146 of each pair engages a sun gear 148, as illustrated in the upper portion of Figure 2. The sun gear 148 is disposed upon a quill or sleeve 150 which extends axially along the intermediate shaft 80 to the chain drive sprocket 110 which is secured thereto by a plurality of interengaging splines 152.

The planet carrier 142 is also coupled by interengaging splines 156 to a bell shaped output member 158 which, in turn, is drivingly coupled by interengaging splines or other members such as gear teeth 162 to a primary output shaft 164. Preferably, a roller bearing 166 rotatably supports one end of the intermediate shaft 80 within a counter bore of the primary output shaft 164. An antifriction bearing such as a ball bearing assembly 168 rotatably supports the primary output shaft 164.

The transfer case assembly 16 also includes an electromagnetic clutch assembly 170 have a friction clutch pack comprising a plurality of interleaved clutch plates or discs 172 operably disposed between the planet carrier 142 of the interaxle differential assembly 130 and the quill or sleeve 150. The friction clutch pack 172 is actuated by an electromagnetic ball ramp activator having an electromagnetic coil 176, a rotor 178 and an armature 182 which is actuated by a ball ramp operator 184. As will be readily understood, energization of the electromagnetic coil 176 causes drag on the rotor 178 which causes the ball ramp operator 184 to axially move the rotor 182 toward the right to compress the interleaved clutch plates or discs 172 thereby coupling the planet carrier 140 to the quill or sleeve 150 to inhibit differentiation by the interaxle differential assembly 130.

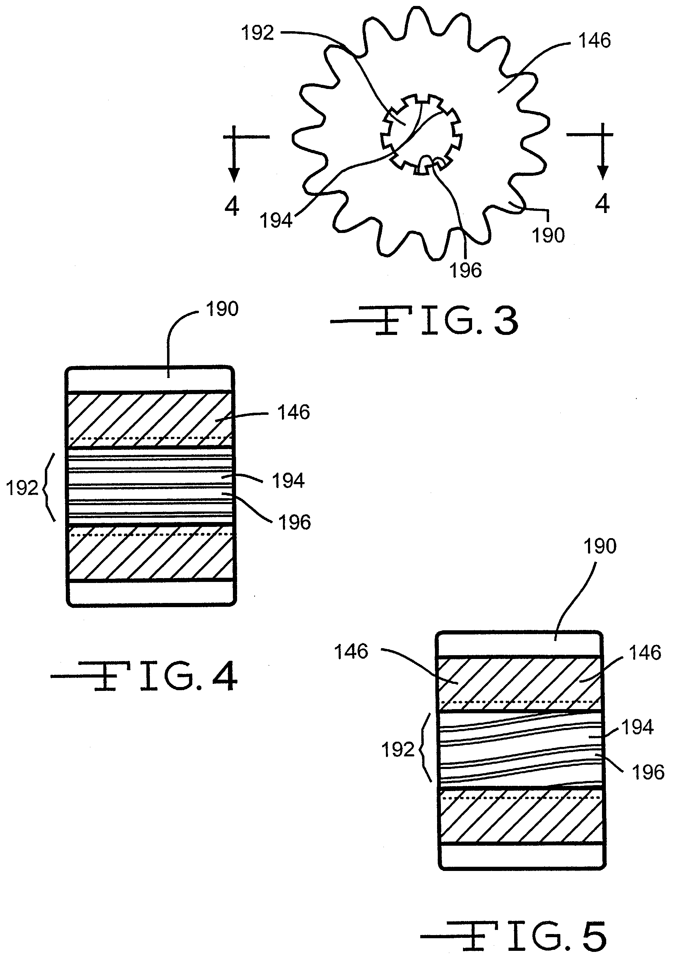

Turning now to Figures 3, 4 and 5, the planet gear 146 incorporating the present invention is illustrated. Preferably the planet gear 146 is a powdered metal, net formed gear. The base material is preferably MPIF FL 4400 with 0.4% added carbon. The planet gear 146 includes a plurality of gear teeth 190 uniformly disposed about its periphery and an axial passageway or through bore 192 which is defined by a plurality of smaller diameter lands 194 alternating with a plurality of larger diameter channels or grooves 196. As illustrated in Figure 4, the lands 194 and channels or grooves 196 may extend axially along the passageway or bore 192 or, as illustrated in Figure 5, the lands 194 and the channels or grooves 196 may define a helical or spiral path.

In either event, the alternating lands 194 and channels or grooves 196 provide several significant benefits by virtue of their discontinuous contact with the stub shafts 144. First of all, they facilitate and improve lubrication and thus the service life of the planet gears 146 on the stub shafts 144 by providing passageways through which lubricating fluids can readily move. Second of all, the channels or grooves 196 facilitate the outflow of any particulates or contaminants from the interface between the stub shafts 144 and the planet gears 146. Such improved lubricant and fluid flow also improves heat transfer out of the stub shafts 144 and planet gears 146. Finally, the distribution of the lands 194 and the grooves 196 relative to the gear teeth 190 provides an indexing feature for error proof locating of the component during manufacturing.

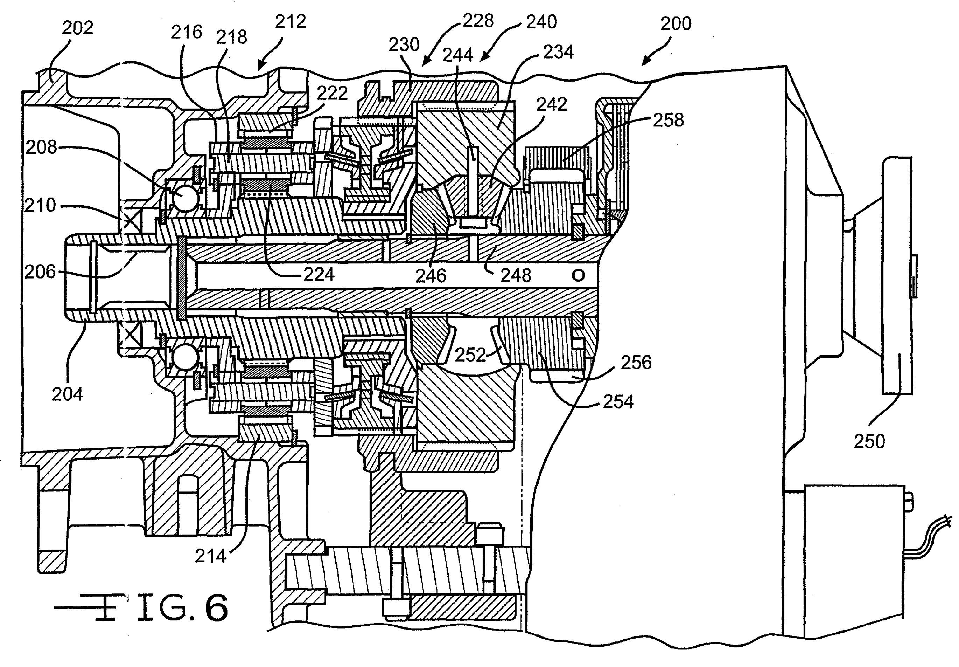

The foregoing description is directed to spur type planet gears 146 disposed in a planetary gear type interaxle differential assembly 130 as illustrated in Figure 2. The present invention is also readily adaptable for use in a bevel gear type differential and this alternate embodiment is described below with reference to Figures 6, 7, 8 and 9.

Referring now to Figures 6, an alternate embodiment transfer case assembly 200 which is, in many respects, similar to the transfer case assembly 16 illustrated in Figure 2 is presented. As such, it includes a cast metal housing 202 having various features which receive and support various mechanical components of the transfer case assembly 200. An input shaft 204 having splines 206 is rotatably supported by a ball bearing assembly 208 and an oil seal 210 provides a suitable fluid tight seal between the input shaft 204 and the housing 202.

The transfer case assembly 200 includes a planetary gear assembly 212 having a ring gear 214 and a carrier 216 receiving a plurality of stub shafts 218 upon which a plurality of planet gears 222 rotate. The planet gears 222 are in constant mesh with the ring gear 214 and a sun gear 224 formed in the input shaft 204.

A synchronizer assembly 228 having a clutch collar 230 selectively synchronizes and couples a reduced speed output from the planet carrier 216 or the direct, high speed output from the input shaft 204 to a circular drive member 234 of a bevel gear center or interaxle differential assembly 240. The bevel gear interaxle differential assembly 240 includes a plurality, preferably three, bevel idler gears 242 secured and retained within the circular drive member 234 upon radially extending stub shafts 244. A first bevel side or output gear 246 is splined to an output shaft 248 and drives a primary output component such as a flange 250 which may be a portion of a universal joint 44 as illustrated in Figure 1. A second bevel side or output gear 252 is a portion of a chain drive sprocket 254 having chain drive teeth 256 which engage a drive chain 258 which, in turn, drives a secondary output shaft (not illustrated).

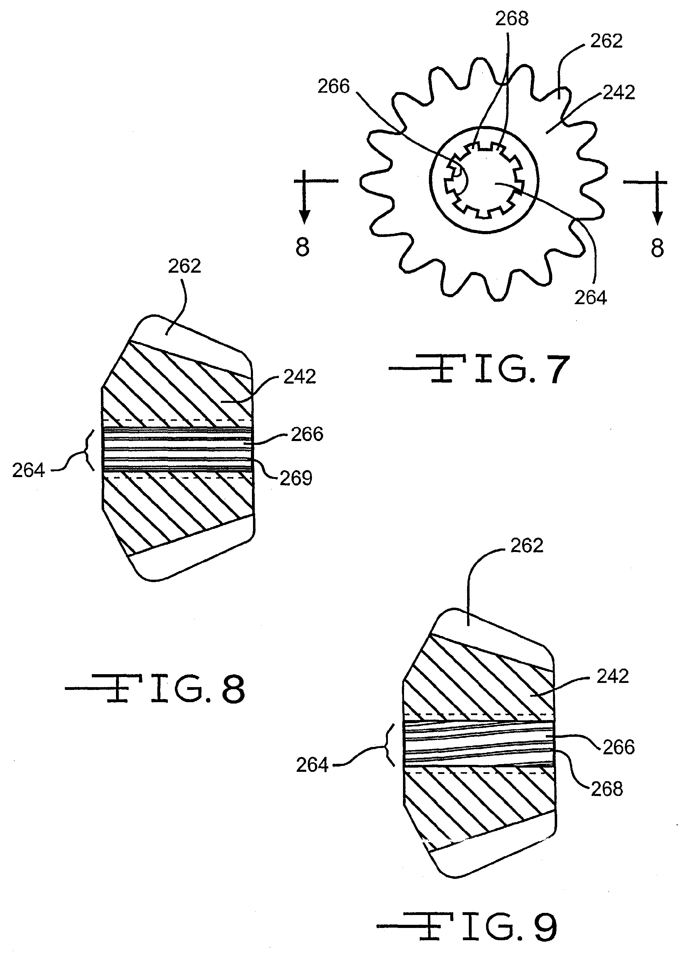

Referring now to Figures 7, 8 and 9, the differential bevel idler gear 242 incorporating the present invention is illustrated. Preferably, the differential bevel idler gear 242 is also a powdered metal, net formed gear having a plurality of gear teeth 262 uniformly disposed about its periphery and a through bore or passageway 264 which is defined by a plurality of smaller diameter lands 266 alternating with a plurality of larger diameter channels or grooves 268. As illustrated in Figure 8, the lands 266 and channels or grooves 268 may extend axially along the bore or passageway 264 or, as illustrated in Figure 9, the lands 266 and the channels or grooves 268 may define a helical or spiral path. It will be appreciated that the interaxle differential bevel gears 242 are the same with regard to materials and manufacturing techniques and provide the same benefits regarding lubrication, contaminant removal and heat transfer as the planet gears 146 described above.

While the foregoing descriptions have focused primarily upon the use of the planet gears 146 and the bevel gears 242 in a differential assembly, such as the assemblies 130 and 240, it should be appreciated that they are equally useful as replacements for the pinion gears 68 in the planetary gear speed reduction assembly 60 illustrated in Figure 2 and for the planet gears 222 in the transfer case assembly 212 illustrated in Figure 6. All the above-described lubrication, contaminant removal and heat transfer benefits will accompany such use.

The foregoing disclosure is the best mode devised by the inventors for practicing this invention. It is apparent, however, that devices incorporating modifications and variations will be obvious to one skilled in the art of transfer case and differential and planetary gears. Inasmuch as the foregoing disclosure is intended to enable one skilled in the pertinent art to practice the instant invention, it should not be construed to be limited thereby but should be construed to include such aforementioned obvious variations and be limited only by the scope and spirit of the following claims.

## Claims

1. A gear assembly comprising, in combination,
an input member,
a first output member,
a second output member,
a plurality of stub shafts,
a plurality of gears disposed on respective said plurality of stub shafts and driven by said input member and driving said first and said second output members,
a least one of said plurality of gears defining a through passageway having alternating lands and grooves.

2. The gear assembly of claim 1 wherein said lands and said grooves extend axially along said passageway.

3. The gear assembly of claim 1 wherein said lands and said grooves extend helically along said passageway.

4. The gear assembly of any one of claims 1 to 3 wherein said gears are spur gears.

5. The gear assembly of any one of claims 1 to 3 wherein said gears are bevel gears.

6. The gear assembly of any one of claims 1 to 5 further including a transfer case having an input operably coupled to said input member, a primary output coupled to said first output member and a secondary output coupled to said second output member.

7. A differential assembly comprising, in combination,
a sun gear,
a ring gear,
a carrier disposed between said sun gear and said ring gear and having a plurality of shafts,
a plurality of planet gears each disposed on a respective one of said plurality of shafts and engaging at least one of said sun gear and said ring gear,
at least one of said plurality of planet gears having an internal bore defining a surface and a plurality of grooves disposed in said surface.

8. The differential assembly of claim 7 wherein said planet gears are disposed in pairs, one of each of said pairs engaging said sun gear and the other of each of said pairs engaging said ring gear.

9. The assembly of any one of claims 1 to 8 wherein said gears are net formed of powdered metal.

10. A differential assembly comprising, in combination,
a rotating housing,
a first side bevel gear driving a first output,
a second side bevel gear driving a second output,
a pair of idler bevel gears, each of said pair of bevel gears engaging both of said side bevel gears,
at least one of said idler bevel gears having a bore and a bore surface defining a plurality of spaced apart grooves.

11. The differential assembly of claim 10 wherein said idler bevel gears are net formed of powdered metal.

12. The differential assembly of any one of claims 7 to 11 wherein said grooves define lands and said grooves and lands are oriented axially.

13. The differential assembly of any one of claims 7 to 11 wherein said grooves define lands and said grooves and lands are oriented helically.

14. The differential assembly of any one of claims 7 to 13 wherein said differential assembly is disposed in a transfer case.

15. The differential assembly of claim 14 wherein said transfer case includes a planetary gear assembly providing a reduced speed drive mode.
